# EUROPÄISCHE PATENTSCHRIFT

(11) **EP 0 661 287 B1**
(45) Veröffentlichungstag und Bekanntmachung des Hinweises auf die Patenterteilung: **08.05.1996**
(21) Anmeldenummer: 94120375.4
(22) Anmeldetag: 22.12.1994
(51) Int. Cl.: C07F 7/08, C08G 77/52, C09K 19/40

(54) **Polymerisierbare flüssigkristalline Siloxane**
Polymerizable liquid-crystalline organosiloxanes
Siloxanes liquides criystallines polymérisable

(30) Priorität: 23.12.1993 DE 4344308
(43) Veröffentlichungstag der Anmeldung: 05.07.1995
(73) Patentinhaber: Consortium für elektrochemische Industrie GmbH, D-81379 München (DE)
(72) Erfinder: Stohrer, Jürgen, Dr., D-81479 München (DE); Lottner, Willibald, D-82362 Weilheim (DE)
(74) Vertreter: Fritz, Helmut, Dr.

(56) Entgegenhaltungen:
- EP-A- 0 358 208
- EP-A- 0 442 097
- EP-A- 0 471 277
- WO-A-93/05436

## Beschreibung

Die Erfindung betrifft vollständig polymerisierbare flüssigkristalline Siloxane, Verfahren zu ihrer Herstellung, ihre Verwendung sowie durch Polymerisation der flüssigkristallinen Siloxane erhältliche flüssigkristalline Polyorganosiloxane.

Polymerisierbare flüssigkristalline Polysiloxane und Verfahren zu ihrer Herstellung sind beispielsweise aus US-A-4,388,453 und US-A-5,211,877 bekannt. Die darin beschriebenen Polysiloxane bilden bei der Polymerisation allerdings dreidimensional vernetzte Polymere, die daher spröde sind und leicht brechen. Ferner zeichnen sich die darin beschriebenen Polysiloxane durch hohe Viskosität aus, können also nur bei erhöhten Temperaturen verarbeitet werden, die wiederum zu verfrühter teilweiser Polymerisation der Materialien führen kann. Bei tieferen Temperaturen wird zudem die Einstellung von Gleichgewichtszuständen, wie Orientierung durch die hohe Viskosität verhindert.

Die beschriebenen oligomeren bzw. polymeren Verbindungen stellen aufgrund der darin beschriebenen Verfahren zu ihrer Herstellung keine definierte einheitliche Verbindung dar, sondern immer statistische Gemische von Siloxanen mit unterschiedlichem Substitutionsmuster. Dies kann zu inhomogenen bzw. heterogenen Phasen führen, die für optische Anwendungen nicht verwendet werden können. Weiterhin können diese Gemische im allgemeinen nicht vollständig polymerisiert werden, da in unterschiedlichen Anteilen nichtpolymerisierbare Siloxane vorliegen. Ferner können diese Gemische in der Regel nicht kristallisiert werden, was eine einfache Reinigung der Siloxane erschwert.

Die bekannten polymerisierbaren flüssigkristallinen Polysiloxane weisen, sofern sie eine cholesterische Phase besitzen, eine nur geringe Temperaturabhängigkeit der Farbe der cholesterischen Reflexion innerhalb des der Verarbeitung zugänglichen Temperaturintervalles auf, d.h. sie zeigen nur schwach ausgeprägte thermochrome Eigenschaften. Für die Anwendung in photolithographisch strukturierbaren Filter sind ausgeprägte thermochrome Eigenschaften aber eine zwingende Voraussetzung.

Polymerisierbare Polysiloxane mit mesogenen Gruppen sind auch z. B. aus EP-A-471 277 bekannt. Die darin beschriebenen monomeren Siloxane bilden aber meist nur kristalline oder flüssige Phasen aus. Nur in wenigen Fällen werden hochgeordnete flüssigkristalline Phasen erhalten. Hochgeordnete flüssigkristalline Phasen zeichnen sich allerdings durch hohe Viskosität aus und können daher nur in Lösung oder Schmelze unter Verlust ihrer flüssigkristallinen Eigenschaft und/oder bei hohen Temperaturen verarbeitet werden, was zu vorzeitiger Polymerisation der Materialien führen kann. Ferner lassen sich hochgeordnete Phasen nicht durch einfache Verfahren wie z. B. Rakeln oder Spincoating auftragen und orientieren. Auch besitzen hochgeordnete Phasen keine farbige Reflexion und daher auch keine thermochrome Eigenschaften.

Aufgabe der Erfindung war es daher, polymerisierbare flüssigkristalline Siloxane definierter Zusammensetzung aufzufinden, die sich durch niedrige Viskosität auszeichnen, sowie ein Verfahren zu ihrer Herstellung bereitzustellen. Weitere Aufgabe war es, polymerisierbare flüssigkristalline Siloxane mit ausgeprägten thermochromen Eigenschaften zu finden.

Die Erfindung betrifft flüssigkristalline Siloxane der allgemeinen Formel I

Y¹-(SiR₂-O)_{π}-SiR₂-Y² (I),

worin
**Y¹** einen eine mesogene Gruppe aufweisenden Alkyl- oder Alkenylrest,
**Y²** einen organischen Rest mit mindestens einer polymerisationsfähigen Gruppe und mindestens einer zweiwertigen cyclischen Gruppe,
**R** einen C₁- bis C₃-Alkylrest und
**π** eine ganze Zahl im Wert von 1 bis 5 bedeuten.

Der Begriff "mesogene Gruppen" ist in der Fachwelt gut bekannt. Es sind die Gruppen, die in einem Molekül flüssigkristalline Eigenschaften hervorrufen können. Beispiele für mesogene Gruppen sind Derivate des Cyclohexans, wie Cyclohexylcarbonsäurecyclohexylester, Cyclohexylcarbonsäurephenylester, Cyclohexylphenylether, Cyclohexylbenzole, Dicyclohexylderivate, Derivate des Stilbens, Benzoesäurephenylester und seine Derivate, Steroide, wie Cholesterin, Cholestan, Doristerol und deren Derivate, wie Cholesterinester, Benzylidenaniline, Azobenzol und seine Derivate, Azoxybenzol und dessen Derivate, Alkyl- und Alkoxyderivate von Biphenyl, und Schiff'sche Basen. Oftmals ist es aus anwendungstechnischen Gründen erwünscht, daß die mesogenen Gruppen polare Funktionen, wie beispielsweise die Nitrilgruppe, enthalten, um im Flüssigkristall einen hohen dielektrischen Anisotropieeffekt zu erzielen.

Bevorzugt als mesogene Gruppen aufweisende Alkenyl- bzw. Alkylreste **Y¹** sind diejenigen der allgemeinen Formel II

-D-(X¹ₐ-A¹_{b}-A²_{c})_{d}-Zₑ-(-X²_{f}-A³_{g}-A⁴ₕ-)ᵢ-A⁵ₖ (II),

worin
**D** einen gegebenenfalls mit Halogenatomen substituierten zweiwertigen Kohlenwasserstoffrest der allgemeinen Formel CₙHₘ darstellt, bei dem eine oder mehrere nicht benachbarte Methyleneinheiten durch **X¹** ersetzt sein können,
**n** eine ganze Zahl im Wert von 0 bis 20,
**m** eine nicht negative Zahl mit dem Wert von (2n) oder (2n-2) bedeuten,
**X¹** und **X²** gleiche oder verschiedene zweibindige Reste aus der Gruppe -O-, -COO-, -CONH-, -CO-, -S-, -C≡C-, -CH=CH-, -CH₂-CH₂-, -CH=N-, -N=N- und -N=N(O)-,
**A¹, A², A³** und **A⁴** gleiche oder verschiedene zweibindige Reste, nämlich 1,4-Phenylen-, 1,4-Cyclohexylenreste, substituierte Arylene mit 1 bis 10 Kohlenstoffatomen, substituierte Cycloalkylene mit 1 bis 10 Kohlenstoffatomen und Heteroarylen mit 1 bis 10 Kohlenstoffatomen,
**Z** gleiche oder verschiedene zwei- bis vierbindige Benzol-1,4-Cyclohexan- oder 1,3-Cyclopentanreste,
**A⁵** gleiche oder verschiedene, gesättigte oder olefinisch ungesättigte Alkyl-, Alkoxy- oder Cycloalkylreste mit jeweils 1 bis 16 Kohlenstoffatomen, Steroidreste, Halogenatome, Wasserstoffatome, Hydroxyl-, Nitril- und Trialkylsiloxygruppen, deren jeweilige Alkylreste 1 bis 8 Kohlenstoffatome besitzen,
**a, b, c, d, f, g, h, i** und **k** jeweils unabhängig voneinander gleiche oder verschiedene ganze Zahlen im Wert von 0, 1, 2 oder 3, die Summe a+b+c+d+e+f+g+h+i+k mindestens 2 und die Summe von d und i maximal 4 beträgt und
**e** eine Zahl im Wert von 0 oder 1, bedeuten, mit der Maßgabe, daß in **Y¹** keine zwei Sauerstoffatome direkt aneinander gebunden sind.

Die Reste X¹ und X² können, falls sie nicht symmetrisch gebaut sind, mit jedem ihrer Enden an jedem ihrer Bindungspartner verbunden sein. So kann beispielsweise in der obigen Formel (II) und in den unten aufgeführten Formeln der Rest -COO- auch als -OOC-, der Rest -CONH- auch als -NHCO-, -CH=N- auch als -N=CH- gebunden sein.

Als Substituenten für die substituierten Arylene und Cycloalkylene A¹, A², A³ und A⁴ sind Halogenatome, C₁- bis C₄-Alkoxyreste, Nitro- und Cyanogruppen, C₁- bis C₆-Alkylreste, Carboxy-(C₁- bis C₄-Alkyl)-Reste und Tri-(C₁- bis C₄-Alkyl)-Siloxyreste bevorzugt.

Vorzugsweise hat n einen Wert von 3 bis 6 und vorzugsweise hat m den Wert 2n.

k hat vorzugsweise den Wert 1.

a und f haben jeweils unabhängig voneinander vorzugsweise die Werte 0 oder 1.

Beispiele für Reste A⁵ sind Alkylreste, wie der Methyl-, Ethyl-, n- Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Oktylreste, wie der n-Octylrest und iso-Oktylreste, wie der 2,2,4-Trimethylpentyirest, Nonylreste, wie der n-Nonylrest, Decylreste, wie der n-Decylrest, Dodecylreste, wie der n-Dodecylrest, Hexadecylreste, wie der n-Hexadecylrest; Alkenylreste, wie der Vinyl- und der Allylrest, Butenyl-, Pentenyl-, Hexenyl-, Heptenyl-, Oktenyl-, Oktadienyl-, Decenyl-, Dodecenyl- und Hexadecenylreste; Cycloalkylreste, wie Cyclopentyl-, cyclohexyl-, Cycloheptylreste und Methylcyclohexylreste; Alkyloxyreste, wie der Methoxy-, Ethoxy-, n-Propoxy-, Isopropoxy-, n-, sec.- und tert.-Butoxyrest, Pentoxy-, Hexoxy-, Oktoxy-, Decoxy-, Hexadecoxyreste; Alkenoxyreste, wie der Allyloxyrest, Butenyloxy-, Pentenyloxy-, Hexenyloxy-, Oktenyloxy-, Decenyloxy- und Hexadecenyloxyreste; Cycloalkylreste, wie der Cyclopentyl-, Cyclohexyl-, Cycloheptylrest; Cycloalkenylreste, wie Cyclopentenyl-, Cyclohexenyl- und Cycloheptenylreste; Steroidreste, wie der Cholestan-, Cholesteryl- und Doristerylrest; Fluor-, Chlor- oder Bromatome; Wasserstoffatome; Hydroxyl-, Nitril-, Trimethylsilyloxy- und Triethylsilyloxygruppen.

Es ist ganz besonders bevorzugt, daß -D-(X¹ₐ-A¹_{b}-A²_{c})_{d}- in der obigen allgemeinen Formel (II) einen Rest der Formel III 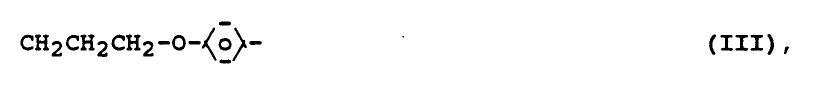
bedeutet.
Insbesondere bevorzugt als Verbindungen der allgemeinen Formel (II) sind diejenigen der allgemeinen Formel IV 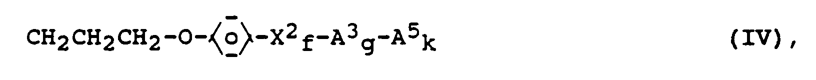
worin X², A³, A⁵, f, g und k die für die allgemeine Formel II angegebenen Bedeutungen haben und vorzugsweise f den Wert 1, g entweder 0 oder 1 und k 1 besitzt.

Bevorzugt als organische Reste **Y²** mit mindestens einer polymerisationsfähigen Gruppe und mindestens einer zweibindigen cyclischen Gruppe sind diejenigen der allgemeinen Formel V

-D-(X¹ₐ-B¹_{b}-B²_{c})_{d}-Zₑ-(-X²_{f}-B³_{g}-B⁴ₕ-)ᵢ-A⁵ₖ (V),

worin
**B¹, B², B³** und **B⁴** die Bedeutungen der Reste **A¹, A², A³, A⁴** und **D** aufweisen,
**D, X¹, X², Z, A⁵, a, b, c, d, f, g, h, i, k** und **e** die vorstehenden bei der allgemeinen Formel II angegebenen Bedeutungen aufweisen, wobei die Summe b+c+e+g+h mindestens 1 beträgt,
mit der Maßgabe, daß in **Y²** keine zwei Sauerstoffatome direkt aneinander gebunden sind und mindestens eine ethylenisch ungesättigte Doppelbindung vorhanden ist.

Vorzugsweise weis der Rest **Y²** mindestens eine (Meth)acryl-Vinyl- oder Zimtsaureestergruppe auf.

Besonders bevorzugt als organische Reste **Y²** mit mindestens einer polymerisationsfähigen Gruppe und mindestens einer zweibindigen cyclischen Gruppe sind die besonders gut photopolymerisierbaren Reste der allgemeinen Formel VI

-(CH₂)ₛ-(X¹)ₜ-(A¹)ᵤ-R¹ (VI),

worin
**R¹** einen Rest aus der Gruppe der Verbindungen der allgemeinen Formeln VII und VIII

-X²-A²-(O)ᵥ-(C₂H₄O)_{w}-Z^{¹} (VII),

-Z²-A²-A⁵ (VIII),

bedeutet,
worin
**s** eine ganze Zahl im Wert von 2 bis 8,
**t**, **u** und **v** jeweils 0 oder 1,
**w** eine ganze Zahl mit dem Wert 0, 1 oder 2,
**Z¹** eine (Meth)acryl- oder Vinylgruppe und,
**Z²** eine Gruppe der Formel -CH=CH-COO- oder -OOC-CH=CH- bedeuten und
**A¹, A², A⁵, X¹** und **X²** die vorstehenden Bedeutungen aufweisen.

In den allgemeinen Formeln VI bis VIII sind als Bedeutungen für A¹ und A² 1,4- Phenylenreste bevorzugt. Bevorzugt als **Z¹** ist eine Methacrylgruppe. Vorzugsweise haben **w** die Bedeutung 0 und **v** die Bedeutung 1.

Beispiele für den Rest **R** sind der Methyl-, Ethyl-, n-Propyl- und i-Propylrest, wobei der Methylrest bevorzugt ist.

Vorzugsweise bedeutet _{π} den Wert 1.

Die erfindungsgemäßen flüssigkristallinen Siloxane der vorstehenden allgemeinen Formel I können durch folgendes Verfahren dargestellt werden :
In einem ersten Schritt wird α,ω-Dihydrosiloxan der allgemeinen Formel IX

H-(SiR₂-O)_{π}-SiR₂-H (IX),

mit einem mesogene Gruppen aufweisenden Alken und/oder Alkin in Gegenwart eines an sich bekannten Hydrosilylierungskatalysators zu einer Verbindung der allgemeinen Formel X

Y¹(SiR₂-O)_{π}-SiR₂-H (X),

umgesetzt, wobei in den allgemeinen Formeln IX und X **Y¹, R** und **π** die vorstehenden Bedeutungen aufweisen.

Die Umsetzung findet vorzugsweise in 0.5 - 100 fachem,insbesondere 5 - 20 fachem Überschuß der Verbindung der allgemeinen Formel IX gegenüber dem mesogene Gruppen aufweisenden Alken und/oder Alkin, gegebenenfalls in Gegenwart eines Lösemittels, vorzugsweise in der Gegenwart von 1 - 5000 ppm, insbesondere 10 - 100 ppm eines Hydrosilylierungskatalysators, vorzugsweise bei Temperaturen von 20 - 120°C, insbesondere 50-80°C unter einem Druck von vorzugsweise 0.05 - 1 MPa, insbesondere 0.09 - 0.2 MPa statt. Aus der Reaktionsmischung wird vorzugsweise durch Destillation bei einer Temperatur von vorzugsweise 20 - 140°C, insbesondere 20 - 100°C und einem Druck von vorzugsweise 0.001 - 100 kPa, insbesondere 1-10 kPa die überschüssige Verbindung der allgemeinen Formel IX entfernt. In einem alternativen Weg kann der Überschuß der Verbindung der allgemeinen Formel IX auch durch Ausfällung des Reaktionsproduktes der allgemeinen Formel X durch Zusatz geeigneter Lösemittel und Abtrennung der flüssigen Phase vom Reaktionsprodukt entfernt werden.

In einem zweiten Schritt wird das Reaktionsprodukt der allgemeinen Formel X mit einem mindestens eine polymerisationsfähige Gruppe und mindestens eine zweiwertige cyclische Gruppe aufweisenden Alken und/oder Alkin in Gegenwart eines an sich bekannten Hydrosilylierungskatalysators zu einer Verbindung der allgemeinen Formel I umgesetzt.

Die bevorzugten erfindungsgemäßen Siloxane mit Resten der allgemeinen Formel V werden vorzugsweise hergestellt durch Umsetzung einer Verbindung der allgemeinen Formel X mit einer Verbindung der allgemeinen Formel XI

E-(X¹ₐ-B¹_{b}-B²_{c})_{d}-Zₑ-(-X²_{f}-B³_{g}-B⁴ₕ-)ᵢ-A⁵ₖ (XI),

worin
**E** einen gegebenenfalls mit Halogenatomen substituierten einwertigen Kohlenwasserstoffrest der allgemeinen Formel CₙH₍ₘ₋₁₎ darstellt, bei dem eine oder mehrere nicht benachbarte Methyleneinheiten durch **X¹** ersetzt sein können, und
**X¹, X², B¹, B², B³, B⁴, Z, A⁵, a, b, c, d, e, f, g, h, i,** und **k** die vorstehenden Bedeutungen aufweisen.

Bei der Umsetzung wird vorzugsweise ein Verhältnis 0.5 - 1.5, insbesondere 0.8 - 1.1 der Verbindung der allgemeinen Formel X gegenüber dem eine polymerisationsfähige Gruppe und mindestens eine zweiwertige cyclische Gruppe aufweisenden Alken und/oder Alkin gewählt. Die Umsetzung wird gegebenenfalls in Gegenwart eines Lösemittels, vorzugsweise bei Temperaturen von 20 - 120°C, insbesondere 50-100°C unter einem Druck von vorzugsweise 0.05 - 1 MPa, insbesondere 0.09 - 0.2 MPa durchgeführt. In einem alternativen Weg kann diese Umsetzung mit einem mit einer Schutzgruppe versehenen und mindestens eine zweiwertige cyclische Gruppe aufweisenden Alken und/oder Alkin erfolgen, wobei dann in einem dritten Schritt in an sich bekannter Weise die Schutzgruppe entfernt wird und dann in geeigneter Weise eine polymerisationsfähige Gruppe angefügt wird. Dabei kann in einem alternativen Weg im ersten Schritt zuerst ein mit einer Schutzgruppe versehenes und mindestens eine zweiwertige cyclische Gruppe aufweisenden Alken und/oder Alkin eingesetzt werden und im zweiten Schritt ein mit einer mesogenen Gruppe versehenes Alken und/oder Alkin.

Als Hydrosilylierungskatalysator kann in beiden Schritten der gleiche Katalysator verwendet werden, es kann aber auch zusätzlicher Katalysator im zweiten Schritt zugegeben werden. Die erfindungsgemäße Umsetzung sowohl der mesogene Gruppen aufweisenden Alkene und/oder Alkine als auch der mindestens eine polymerisierbare Gruppe bzw. Schutzgruppe aufweisenden Alkene und/oder Alkine mit direkt an Siliciumatome gebundenen Wasserstoffatomen der Siloxane der allgemeinen Formeln X und XI erfolgt vorzugsweise in Gegenwart eines Ruthenium, Rhodium, Palladium, Platin und/oder deren Verbindungen enthaltenden Hydrosilylierungs-katalysator. Bevorzugt sind Platin und/oder dessen Verbindungen. Es können hier alle Katalysatoren eingesetzt werden, die auch bisher zur Addition von direkt an Siliciumatome gebundenen Wasserstoffatomen an aliphatisch ungesättigte Verbindungen eingesetzt wurden. Beispiele für solche Katalysatoren sind metallisches und feinverteiltes Platin, das sich auf Trägern, wie Siliciumdioxid, Aluminiumoxid oder Aktivkohle befinden kann, Verbindungen oder Komplexe von Platin, wie Platinhalogenide, z.B. PtCl₄, H₂PtCl₆·6H₂O, Na₂PtCl₄·4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukte aus H₂PtCl₆·6H₂O und Cyclohexanon, Platin-Vinylsiloxan-Komplexe, insbesondere Platin-Divinyltetramethyldisiloxan-Komplexe mit oder ohne Gehalt an nachweisbarem, anorganisch gebundenem Halogen, Bis-(γ-picolin)-platindichlorid, Trimethylendipyridinplatindichlorid, Dicyclopentadienplatindichlorid, Dimethylsulfoxydethylenplatin(II)dichlorid sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, oder Ammonium-Platin-Komplexe.

Falls Lösungsmittel verwendet werden, sind Lösungsmittel oder Lösungsmittelgemische, welche unter den Reaktionsbedingungen weitgehend inert sind, und insbesondere solche mit einem Siedepunkt bzw. Siedebereich von bis zu 120°C bei 0,1 MPa bevorzugt. Beispiele für solche Lösungsmittel sind Ether, wie Dioxan, Tetrahydrofuran, Diethylether, Methyl-tert.-butylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Hexan-Isomerengemische, Heptan, Octan, Waschbenzin, Petrolether, Benzol, Toluol, Xylole; Ketone, wie Aceton, Methylethylketon, Methylisobutylketon; Ester, wie Essigsäureethylester, Essigsäuremethylester, Essigsäure-n-butylester, Ameisensäureethylester; Schwefelkohlenstoff und Nitrobenzol, oder Gemische dieser Lösungsmittel. Die Bezeichnung Lösungsmittel bedeutet nicht, daß sich alle Reaktionskomponenten in diesem lösen müssen. Die Reaktion kann auch in einer Suspension oder Emulsion eines oder mehrerer Reaktionspartner durchgeführt werden. Die Reaktion kann auch in einem Lösungsmittelgemisch mit einer Mischungslücke durchgeführt werden, wobei in jeder der Mischphasen jeweils mindestens ein Reaktionspartner löslich ist.

Schutzgruppen für Hydroxylgruppen sind beispielsweise in der US-A 5,211,877 beschrieben. So kann das Wasserstoffatom der Hydroxylgruppe beispielsweise durch eine tert.-Butyl-, Benzyl-, Triphenylmethyl-, Trialkylsilyl-, Formaldehydacetal-, Acetaldehydacetal-, O,N-Acetal-, O,O-Acetal-, Carbonsäureester-, wie Chloressigsäureester-, Orthoester- oder Kohlensäureestergruppe ersetzt sein. Die chemische Natur der Schutzgruppe spielt im erfindungsgemäßen Verfahren an sich keine Rolle. Entscheidend ist, daß die Schutzgruppe während der Anlagerung des Alkens und/oder Alkins an direkt an Silicium gebundene Wasserstoffe stabil ist, sich aber nach dieser Reaktion unter für das Produkt im wesentlichen inerten Bedingungen entfernen läßt.

Bevorzugt sind säurelabile Schutzgruppen, insbesondere die Tri(C₁- bis C₄-Alkyl)-Silylgruppe, die tert.-Butyl-, Triphenylmethyl- und die Ameisensäureorthoestergruppe, ganz besonders die Trimethylsilylgruppe. Die Abspaltung der Schutzgruppe sowie die Anfügung einer polymerisationsfähigen Gruppe erfolgt in an sich bekannter Weise wie beispielsweise in der US-A 5,211,877 beschrieben.

Alle der vorstehend oder nachstehend genannten Reaktionspartner, Katalysatoren, Lösungsmittel, Photoinitiatoren und Vorrichtungen wie UV-Licht-Quellen können einzeln oder im Gemisch eingesetzt werden. Es können z.B. jeweils eine Verbindung der allgemeinen Formeln (I) oder (IX) und (X), ein Platinkatalysator, ein Lösungsmittel usw., es können auch jeweils Gemische oder Kombinationen der vorstehend genannten Substanzen bzw. Geräte eingesetzt werden.

Die erfindungsgemäßen Verbindungen der allgemeinen Formel (I) können zur Einstellung ihrer thermischen Eigenschaften sowie ihrer Polymerisationseigenschaften mit anderen Verbindungen, wie z.B. niedermolekulare mesogene wie nichtmesogene Verbindungen zur Absenkung der Viskosität, Photoinitiatoren und Photosensibilisatoren für UV-Photovernetzung, Polymerisationsinhibitoren zur Vermeidung vorzeitiger Polymerisation in an sich bekannter Weise vermischt werden, wie z.B. in der US-A 5,211,877 beschrieben. Die Verwendung von Füllstoffen kann ebenfalls in der in der US-A 5,211,877 beschriebenen Weise erfolgen.

Die erfindungsgemäßen Siloxane eignen sich insbesondere für die Photopolymerisation. Vorzugsweise werden die erfindungsgemäßen Siloxane dadurch polymerisiert, daß sie bei Temperaturen von -20°C bis 160°C, insbesondere von 20°C bis 140°C, auf ein Substrat aufgetragen und in an sich bekannter Weise orientiert werden, beispielsweise durch Schmelzauftrag mittels eines Rakels, durch elektrische oder magnetische Felder oder durch Auftrag auf mit orientierungsschichten versehene Substrate, und anschließend bei der gleichen oder einer anderen Temperatur der Strahlung einer UV-Lampe ausgesetzt werden. Die durch Polymerisation der erfindungsgemäßen Siloxane erhältlichen flüssigkristallinen Polyorganosiloxane sind ebenfalls Gegenstand der Erfindung.

Die erfindungsgemäßen flüssigkristallinen Siloxane finden Verwendung zur Herstellung von Membranen, insbesondere zur Trennung von Stoffgemischen, beispielsweise von Gasen wie Sauerstoff und Stickstoff, in der optische Anzeige elektromagnetischer Felder, der Optoelektronik, auf dem Gebiet der Informationsspeicherung, der elektrographischen Verfahren, der Lichtmodulation, als Bestandteil von Polarisationsfolien, optischen Filtern und Reflektoren, in Beschichtungen, als Sicherheltsmerkmal, beispielsweise auf Banknoten oder Scheckkarten, als Bestandteil von Lackpigmenten und als stationäre Phasen für die Gas- und Flüssigchromatographie. Sie eignen sich insbesondere zur Herstellung von optischen Filtern und Reflektoren.

Die erfindungsgemäßen Siloxane können, soweit sie eine cholesterische Phase aufweisen, auch in an sich bekannter Weise zur Darstellung photostrukturierbarer, optischer Materialien, wie Filter, verwendet werden. Dazu werden diese Stoffe als Filme geformt, auf die gewünschte Temperatur gebracht, um auf diese Weise die gewünschte optische Eigenschaft des Films, wie z.B. die Farbe des vom Film reflektierten Lichtes, einzustellen, und dann gegebenenfalls mittels einer Maske photopolymerisiert, um die eingestellten Eigenschaften des Films in den gewünschten Bereichen nachhaltig zu fixieren. Dieser Vorgang kann gegebenenfalls mit verschiedenen Masken wiederholt werden, um so mehrfarbige strukturierte Filter und Reflektoren zu erhalten.

### Beispiele

In den nachfolgend angegebenen Beispielen sind, falls nicht anders angegeben,
a) alle Mengenangaben auf das Gewicht bezogen,
b) alle Drücke 0,10 MPa (abs.),
c) alle Temperaturen 20°C.

### Abkürzungen der Phasen:

- k :: kristallin,
- g :: glasartig,
- i :: isotrop-flüssig,
- n*:: cholesterisch,
- Sg:: smektisch G,
- Sa:: smektisch A,
- Sx:: smektisch
Die nachstehenden flüssigkristallinen Disiloxane weisen die Strukturformel

CH₂=C(CH₃)-COO-C₆H₄-OOC-C₆H₄-O-(CH₂)₃-Si(CH₃)₂-O-Si(CH₃)₂-(CH₂)₃-O-C₆H₄- COO-R³

mit R³ = -Cholesteryl in Beispiel 1a, 2 und 3,
mit R³ = -Dihydrocholesteryl in Beispiel 1b,
mit R³ = -C₆H₄-O-CH₃ in Beispiel 1c und
mit R³ = -Doristeryl in Beispiel 1d auf.

In Beispiel 5 weist das flüssigkristalline Disiloxan die Strukturformel

CH₂=C(CH₃)-COO-(CH₂)₃-Si(CH₃)₂-O-Si(CH₃)₂-(CH₂)₃-O-C₆H₄-COO-Cholesteryl

auf.

### Beispiel 1

### Vollständig polyerisierbare flüssigkristalline Disiloxane

a) 0.13 mol 4-Allyloxybenzoesäurecholesterinester wurden in 200 ml wasserfreiem Toluol gelöst. Nach Zugabe von 1.3 mol 1,1,3,3-Tetramethyldisiloxan wurde die homogene Lösung mit 50 ppm Platindivinyldisiloxan-Komplex (OL-Katalysator der Wacker-Chemie GmbH, München) versetzt und auf Rückfluß (81°C) erhitzt. Nach 6 Stunden wurde der Überschuß an Tetramethyldisiloxan und Toluol abdestilliert, der Rückstand noch zweimal in Toluol aufgenommen und ausdestilliert. Der verbleibende 4-(3-(1,1,3,3-Tetramethyldisiloxanyl)propyloxy)benzoesäurecholesterinester wurde in 150 ml wasserfreiem Toluol gelöst und bei 20°C mit einer Lösung von 0.12 mol 4-Allyloxybenzoesäure(4-Methacryloxyphenyl)ester in 200 ml wasserfreiem Toluol versetzt. Die Lösung wurde unter Rühren für 1 Stunde auf 60°C erwärmt. Die toluolische Lösung des Produktes wurde eingeengt, das Produkt aus einem Gemisch aus Aceton/Wasser (95:5) in der Kälte (0°C) rekristallisiert. Durch nochmaliges Umfällen wurde eine kristalline weiße Verbindung erhalten.
   Als Phasenverhalten dieser Verbindung wurde bestimmt:
   k 85 n* 148 i 148 n* 16 g
   Die beobachtete Unterkühlung der cholesterischen Phase konnte bei 20°C für 3-4 Tage erhalten bleiben. Orientierte Proben des Produktes wiesen eine cholesterische Reflexion bei 400 nm bei 70°C auf. Durch Erwärmen um 20 K wurde die Reflexionswellenlänge auf 380 nm verschoben. Die Viskosität dieser Verbindung betrug 0.76 Pas bei 90°C.
   Zum Vergleich: Das in der US-A 5,211,877, Beispiel 1a, beschriebene polymerisierbare Oligomere wies eine Viskosität von 12 Pas bei 90°C auf; die Reflexionswellenlänge von 510 nm verändert sich bei Erwärmung um 20 K nicht.
b) 0.13 mol 4-Allyloxybenzoesäuredihydrocholesterinester wurden in 200 ml wasserfreiem Toluol gelöst. Nach Zugabe von 1.3 mol 1,1,3,3-Tetramethyldisiloxan wurde die homogene Lösung mit 50 ppm Platindivinyldisiloxan-Komplex (OL-Katalysator der Wacker-Chemie GmbH, München) versetzt und auf Rückfluß (81°C) erhitzt. Nach 6 Stunden wurde der Überschuß an Tetramethyldisiloxan und Toluol abdestilliert, der Rückstand noch zweimal in Toluol aufgenommen und ausdestilliert. Der verbleibende 4-(3-(1,1,3,3-Tetramethyldisiloxanyl)propyloxy)benzoesäuredihydrocholesterinester wurde in 150 ml wasserfreiem Toluol gelöst und bei 20°C mit einer Lösung von 0.12 mol 4-Allyloxybenzoesäure(4-Methacryloxyphenyl)ester in 200 ml wasserfreiem Toluol versetzt. Die Lösung wurde unter Rühren für 1 Stunde auf 60°C erwärmt. Die toluolische Lösung des Produktes wurde eingeengt, das Produkt aus einem Gemisch aus Aceton/Wasser (95:5) in der Kälte (0°C) rekristallisiert. Durch nochmaliges Umfällen wurde eine kristalline weiße Verbindung erhalten.
   Als Phasenverhalten dieser Verbindung wird bestimmt:
   k 82 n* 139 i 139 n* 15 g
   Die beobachtete Unterkühlung der cholesterischen Phase konnte bei 20°C für 3-4 Tage erhalten bleiben. Orientierte Proben des Produktes wiesen eine cholesterische Reflexion bei 810 nm bei 70°C auf. Durch Erwärmen um 20 K wird die Reflexionswellenlänge auf 760 nm verschoben.
c) 41,3 g (0,145 mol) 4-Allyloxybenzoesäure(4-Methoxyphenyl)ester wurden in 200 ml wasserfreiem Toluol gelöst. Nach Zugabe von 391 g (2,9 mol) 1,1,3,3-Tetramethyldisiloxan wurde die homogene Lösung mit 55 ppm Platindivinyldisiloxan-Komplex (OL-Katalysator der Wacker-Chemie GmbH, München) versetzt und auf Rückfluß erhitzt. Nach 6 Stunden wurde der Überschuß an Tetramethyldisiloxan und Toluol abdestilliert, der Rückstand noch zweimal in Toluol aufgenommen und ausdestilliert. Der verbleibende 4-(3-(1,1,3,3-Tetramethyldisiloxanyl)propyloxy)benzoesäure(4-methoxyphenyl)ester wurde in 150 ml wasserfreiem Toluol gelöst und bei 20 °C mit einer Lösung von 44,2 g (0,13 mol)4-Allyloxybenzoesäure(4-Methacryloxyphenyl)ester in 200 ml wasserfreiem Toluol versetzt. Die Lösung wurde unter Rühren für 1 Stunde auf 60 °C erwärmt. Die toluolische Lösung des Produktes wurde eingeengt, das Produkt mit Petrolether in der Kälte (0 °C) gefällt. Das Phasenverhalten dieser Verbindung wurde bestimmt:
   g-8 n 32 i
d) 0,13 mol 4-Allyloxybenzoesäuredoristerylester wurden in 200 ml wasserfreiem Toluol gelöst. Nach Zugabe von 1,3 mol 1,1,3,3-Tetramethyldisiloxan wurde die homogene Lösung mit 50 ppm Platindivinyldisiloxan-Komplex (OL-Katalystor s. o.) versetzt und auf Rückfluß (81 °C) erhitzt.
   Nach 6 Stunden wurde der Überschuß an Tetramethyldisiloxan und Toluol abdestilliert, der Rückstand noch zweimal in Toluol aufgenommen und ausdestilliert. Der verbleibende 4-(3-(1,1,3,3-Tetramethyldisiloxanyl)propyloxy)benzoesäuredoristerylester wurde in 150 ml wasserfreiem Toluol gelöst und bei 20 °C mit einer Lösung von 0,12 mol 4-Allyloxybenzoesäure(4-Methacryloxyphenyl)ester in 200 ml wasserfreiem Toluol versetzt.
   Die Lösung wurde unter Rühren für 1 Stunde auf 60 °C erwärmt. Die toluolische Lösung des Produktes wurde eingeengt, das Produkt aus einem Gemisch aus Aceton/Wasser (95:5) in der Kälte (0 °C) rekristallisiert.
   Als Phasenverhalten dieser Verbindung wurde bestimmt:
   g 25 n* 85 i
   Viskosität und Orientierungsverhalten sind ähnlich wie bei dem Produkt von Beispiel 1a

### Vergleichsbeispiel 2

### Darstellungsweise vollständig Polymerisierbarer flüssigkristalliner Disiloxane durch stöchiometrische Umsetzung

0.13 mol 4-Allyloxybenzoesäurecholesterinester und 0.12 mol 4 Allyloxybenzoesäure(4-Methacryloxyphenyl)ester wurden in 400 ml wasserfreiem Toluol gelöst. Nach Zugabe von 0.16 mol 1,1,3,3-Tetramethyldisiloxan wurde die homogene Lösung mit 50 ppm Platindivinyldisiloxan-Komplex (OL-Katalysator der Wacker-Chemie GmbH, München) versetzt und auf 80°C erhitzt. Nach 6 Stunden ist anhand von ¹H-NMR-Spektren ein Umsatz von weniger als 10 % eingetreten. Durch mehrfache Zugabe von je 0.1 mol 1,1,3,3-Tetramethyldisiloxan konnte in insgesamt 24 Stunden ein Umsatz von 90 % bezogen auf die vinyloge Doppelbindung der Edukte erzielt werden. Das Produkt wurde durch Einengen der toluolischen Lösung erhalten und erwies sich in der chromatographischen Analyse als eine Mischung von drei verschiedenen Produkten sowie der Edukte, darunter ca. 30 % des erwünschten Produktes. Orientierte Proben des Materials wiesen eine ausgeprägte Trübung auf, die sich im Polarisationsmikroskop als Entmischung bzw. Mehrphasigkeit erwies. Damit eignet sich dieses Material nicht zur Präparation optischer Bauelemente.

### Beispiel 3

### Darstellung vollständig polymerisierbarer flüssigkristalliner Disiloxane mittels Schutzgruppe

0.13 mol 4-Allyloxybenzoesäurecholesterinester wurden in 200 ml wasserfreiem Toluol gelöst. Nach Zugabe von 1.3 mol 1,1,3,3-Tetramethyldisiloxan wurde die homogene Lösung mit 50 ppm Platindivinyldisiloxan-Komplex (OL-Katalysator der Wacker-Chemie GmbH, München) versetzt und auf Rückfluß (81°C) erhitzt. Nach 6 Stunden wurde der Überschuß an Tetramethyldisiloxan urd Toluol abdestilliert, der Rückstand noch zweimal in Toluol aufgenommen und ausdestilliert. Der verbleibende 4-(3-(1,1,3,3-Tetramethyldisiloxanyl)propyloxy)benzoesäurecholesterinester wurde in 150 ml wasserfreiem Toluol gelöst und bei 20°C mit einer Lösung von 0.12 mol 4-Allyloxybenzoesäure(4-Trimethylsiloxyphenyl)ester in 150 ml wasserfreiem Toluol versetzt. Die Lösung wurde unter Rühren für 1 Stunde auf 60°C erwärmt. Die toluolische Lösung des Produktes wurde durch Einengen aufkonzentriert, mit 100 ml Methyl-t-Butylether aufgenommen und zur Abspaltung der Trimethylsilyl-Schutzgruppe mit 1 ml 2 %iger Salzsäure versetzt und 60 min. auf 80°C gehalten. Die Wasserphase wurde abgetrennt und die in der organischen Phase verbleibende Säure wurde durch Filtration über festes Natriumhydrogencarbonat entfernt. Die verbleibende Lösung wurde durch Andestillieren des Lösemittels azeotrop von restlichem Wasser befreit. Nach Kühlung auf 0°C wurde die Lösung zuerst mit 0.13 mol Triethylamin und dann unter Rührung langsam mit 0.13 mol Methacrylsäurechlorid versetzt. Nach 1 Stunde wurde die Suspension auf Raumtemperatur erwärmt, 2 Stunden nachgerührt und dann durch Filtration von ausgefallenem Triethylaminhydrochlorid befreit. Nach Waschen der Lösung mit 10 %iger Kochsalzlösung und 5 %iger NaHCO₃-Lösung und Abdestillieren des Lösungsmittels wurde das Produkt aus Aceton in der Kälte ausgefällt. Der so erhaltene Flüssigkristall wies die charakteristische Selektivreflektion einer cholesterischen Phase auf.

### Beispiel 4

### Polymerisationsbeispiel

Das polymerisierbare Disiloxan nach Beispiel 1a wurde mit 2 Gew.% eines Photoinitiators (Irgacure 907 von Ciba-Geigy AG, Schweiz) homogen gemischt. Die Mischung wurde bei 40°C zwischen zwei Glasplatten durch Scheren orientiert und für 30 Sekunden mit UV-Licht (300 - 360nm, 5 mW/cm²) belichtet. Das so erhaltene Polymer wies einen Glaspunkt von 48°C auf. Der Klärpunkt lag bei 184°C, wobei die Probe bis 200°C noch Doppelbrechung aufwies. Nach der Polymerisation wies die Probe nur noch eine sehr geringe Temperaturabhängigkeit der Reflexionswellenlänge auf (+0.2 nm/K; die nicht polymerisierte Probe hingegen wies eine inverse Temperaturabhängigkeit von -1.9 nm/K auf).

### Vergleichsbeispiel 5

### Polymerisierbare flüssigkristalline Disiloxane ohne zweibindige cyclische Gruppe zwischen Siloxaneinheit und Methacrylatgruppe

0.13 mol 4-Allyloxybenzoesäurecholesterinester wurden in 200 ml wasserfreiem Toluol gelöst. Nach Zugabe von 1.3 mol 1,1,3,3-Tetramethyldisiloxan wurde die homogene Lösung mit 50 ppm Platindivinyldisiloxan-Komplex (OL-Katalysator der Wacker-Chemie GmbH, München) versetzt und auf Rückfluß (81°C) erhitzt. Nach 6 Stunden wurde der Überschuß an Tetramethyldisiloxan und Toluol abdestilliert, der Rückstand noch zweimal in Toluol aufgenommen und ausdestilliert. Der verbleibende 4-(3-(1,1,3,3-Tetramethyldisiloxanyl)propyloxy)benzoesäure-cholesterinester wurde in 150 ml wasserfreiem Toluol gelöst und bei 20°C mit einer Lösung von 0.12 mol Allylmethacrylat in 50 ml wasserfreiem Toluol versetzt. Die Lösung wurde unter Rühren für 1 Stunde auf 60°C erwärmt. Die toluolische Lösung des Produktes wurde durch Einengen aufkonzentriert, das Produkt durch Versetzen mit Aceton in der Kälte separiert. Durch nochmaliges Umfällen wurde eine viskose opake Flüssigkeit erhalten.
Als Phasenverhalten dieses Produktes wurde bestimmt:
Sg 58 Sa 116 i
Das Produkt ließ sich aufgrund der hohen Viskosität der smektischen Phase durch Scheren zwischen Glasplatten nicht homogen orientieren. Beim Erwärmen zeigte eine zwischen Glasplatten gescherte Probe keine Reflexionsfarbe.

## Patentansprüche

1. Flüssigkristalline Siloxane der allgemeinen Formel I
Y¹-(SiR₂-O)_{π}-SiR₂-Y² (I)
worin
**Y¹** einen eine mesogene Gruppe aufweisenden Alkyl- oder Alkenylrest,
**Y²** einen organischen Rest mit mindestens einer polymerisationsfähigen Gruppe und mindestens einer zweiwertigen cyclischen Gruppe,
**R** einen C₁- bis C₃-Alkylrest und
**π** eine ganze Zahl im Wert von 1 bis 5 bedeuten.

2. Flüssigkristalline Siloxane nach Anspruch 1, wobei die mesogene Gruppen aufweisende Alkenyl- bzw. Alkylreste **Y¹** der allgemeinen Formel II
-D-(X¹ₐ-A¹_{b}-A²_{c})_{d}-Zₑ-(-X²_{f}-A³_{g}-A⁴ₕ-)ᵢ-A⁵ₖ (II),
entsprechen, worin
**D** einen gegebenenfalls mit Halogenatomen substituierten zweiwertigen Kohlenwasserstoffrest der allgemeinen Formel CₙHₘ darstellt, bei dem eine oder mehrere nicht benachbarte Methyleneinheiten durch **X¹** ersetzt sein können,
**n** eine ganze Zahl im Wert von 0 bis 20,
**m** eine nicht negative Zahl mit dem Wert von (2n) oder (2n-2) bedeuten,
**X¹** und **X²** gleiche oder verschiedene zweibindige Reste aus der Gruppe -O-, -COO-, -CONH-, -CO-, -S-, -C≡C-, -CH=CH-, -CH₂-CH₂-, -CH=N-, -N=N- und -N=N(O)-,
**A¹**, **A², A³** und **A⁴** gleiche oder verschiedene zweibindige Reste, nämlich 1,4-Phenylen-, 1,4-Cyclohexylenreste, substituierte Arylene mit 1 bis 10 Kohlenstoffatomen, substituierte Cycloalkylene mit 1 bis 10 Kohlenstoffatomen und Heteroarylen mit 1 bis 10 Kohlenstoffatomen,
**Z** gleiche oder verschiedene zwei- bis vierbindige Benzol-1,4-Cyclohexan- oder 1,3-Cyclopentanreste,
**A⁵** gleiche oder verschiedene, gesättigte oder olefinisch ungesättigte Alkyl-, Alkoxy- oder Cycloalkylreste mit jeweils 1 bis 16 Kohlenstoffatomen, Steroidreste, Halogenatome, Wasserstoffatome, Hydroxyl-, Nitril- und Trialkylsiloxygruppen, deren jeweilige Alkylreste 1 bis 8 Kohlenstoffatome besitzen,
**a, b, c, d, f, g, h, i** und **k** jeweils unabhängig voneinander gleiche oder verschiedene ganze Zahlen im Wert von 0, 1, 2 oder 3, die Summe a+b+c+d+e+f+g+h+i+k mindestens 2 und die Summe von d und i maximal 4 beträgt und
**e** eine Zahl im Wert von 0 oder 1,
bedeuten, mit der Maßgabe, daß in **Y¹** keine zwei Sauerstoffatome direkt aneinander gebunden sind.

3. Flüssigkristalline Siloxane nach Anspruch 1 oder 2, wobei die organische Resten **Y²** mit mindestens einer polymerisationsfähigen Gruppe und mindestens einer zweibindigen cyclischen Gruppe der allgemeinen Formel V
-D-(X¹ₐ-B¹_{b}-B²_{c})_{d}-Zₑ-(-X²_{f}-B³_{g}-B⁴ₕ-)ᵢ-A⁵ₖ (V),
entsprechen, worin
**B¹, B², B³** und **B⁴** die Bedeutungen der Reste **A¹, A², A³, A⁴** und **D** aufweisen,
**D, X¹, X², Z, A⁵, a, b, c, d, f, g, h, i, k** und **e** die vorstehenden bei der allgemeinen Formel II angegebenen Bedeutungen aufweisen, wobei die Summe b+c+e+g+h mindestens 1 beträgt,
mit der Maßgabe, daß in **Y²** keine zwei Sauerstoffatome direkt aneinander gebunden sind und mindestens eine ethylenisch ungesättigte Doppelbindung vorhanden ist.

4. Flüssigkristalline Siloxane nach einem der Ansprüche 1 bis 3, wobei **π** den Wert 1 bedeutet.

5. Verfahren zur Herstellung der flüssigkristallinen Siloxane nach einem der Ansprüche 1 bis 4, wobei eine Verbindung der allgemeinen Formel X
Y¹(SiR₂-O)_{π}-SiR₂-H (X),
worin
**Y¹**, **R** und **π** die vorstehenden Bedeutungen aufweisen, mit einem eine polymerisationsfähige Gruppe und mindestens eine zweiwertige cyclische Gruppe aufweisenden Alken und/oder Alkin in Gegenwart eines an sich bekannten Hydrosilylierungskatalysators umgesetzt wird.

6. Flüssigkristalline Polyorganosiloxane, erhältlich durch Polymerisation der flüssigkristallinen Siloxane nach einem der Ansprüche 1 bis 4.

7. Verwendung der flüssigkristallinen Siloxane nach einem der Ansprüche 1 bis 4 und der flüssigkristallinen Polyorganosiloxane nach Anspruch 6 zur Herstellung von Membranen, in der optische Anzeige elektromagnetischer Felder, auf dem Gebiet der Informationsspeicherung, der elektrographischen Verfahren, der Lichtmodulation, als Bestandteil von Polarisationsfolien, optischen Filtern und Reflektoren, in Beschichtungen, als Bestandteil von Lackpigmenten und als stationäre Phasen für die Gas- und Flüssigchromatographie.

## Claims

1. Liquid-crystalline siloxanes of the formula I
Y¹-(SiR₂-O)_{π}-SiR₂-Y² (I)
in which
**Y¹** is an alkyl or alkenyl radical containing a mesogenic group,
**Y²** is an organic radical containing at least one polymerizable group and at least one divalent cyclic group,
**R** is a C₁- to C₃-alkyl radical, and
π is an integer having a value of from 1 to 5.

2. Liquid-crystalline siloxanes according to Claim 1, where the alkenyl or alkyl radicals **Y¹** containing mesogenic groups conform to the formula II
-D-(X¹ₐ-A¹_{b}-A²_{c})_{d}-Zₑ-(-X²_{f}-A³_{g}-A⁴ₕ-)ᵢ-A⁵ₖ (II),
in which
**D** is a divalent hydrocarbon radical of the formula CₙHₘ which is unsubstituted or substituted by halogen atoms and in which one or more non-adjacent methylene units may be replaced by **X¹**,
**n** is an integer having a value of from 0 to 20,
**m** is a non-negative number having a value of (2n) or (2n-2),
**X¹** and **X²** are identical or different divalent radicals from the group consisting of -O-, -COO-, -CONH-, -CO-, -S-, -C≡C-, -CH=CH-, -CH₂-CH₂-, -CH=N-, -N=N- and -N=N(O)-,
**A¹, A², A³** and **A⁴** are identical or different divalent radicals, namely 1,4-phenylene, 1,4-cyclohexylene radicals, substituted arylenes having 1 to 10 carbon atoms, substituted cycloalkylenes having 1 to 10 carbon atoms and heteroarylene having 1 to 10 carbon atoms,
**Z** are identical or different divalent to tetravalent benzene-1,4-cyclohexane or 1,3-cyclopentane radicals,
**A⁵** are identical or different, saturated or olefinically unsaturated alkyl, alkoxy or cycloalkyl radicals, in each case having 1 to 16 carbon atoms, steroid radicals, halogen atoms, hydrogen atoms, hydroxyl, nitrile and trialkylsiloxy groups whose respective alkyl radicals have 1 to 8 carbon atoms,
**a, b, c, d, f, g, h, i** and **k** are each, independently of one another, identical or different integers having a value of 0, 1, 2 or 3, the sum a+b+c+d+e+f+g+h+i+k is at least 2 and the sum of d and i is at most 4, and
**e** is a number having a value of 0 or 1, with the proviso that no two oxygen atoms in **Y¹** are directly bonded to one another.

3. Liquid-crystalline siloxanes according to Claim 1 or 2, where the organic radicals **Y²** containing at least one polymerizable group and at least one divalent cyclic group conform to the formula V
-D-(X¹ₐ-B¹_{b}-B²_{c})_{d}-Zₑ-(-X²_{f}-B³_{g}-B⁴ₕ-)ᵢ-A⁵ₖ (V),
in which
**B¹, B², B³** and **B⁴** are as defined for the radicals **A¹, A², A³, A⁴** and **D**,
**D, X¹, X², Z, A⁵, a, b, c, d, f, g, h, i, k** and **e** are as defined above under the formula II, where the sum b+c+e+g+h is at least 1,
with the proviso that no two oxygen atoms in **Y²** are directly bonded to one another and at least one ethylenically unsaturated double bond is present.

4. Liquid-crystalline siloxanes according to any one of Claims 1 to 3, where π has the value 1.

5. Process for the preparation of the liquid-crystalline siloxanes according to any one of Claims 1 to 4, in which a compound of the formula X
Y¹(SiR₂-O)_{π}-SiR₂-H (X),
in which
**Y¹, R** and π are as defined above, is reacted with an alkene and/or alkyne containing a polymerizable group and at least one divalent cyclic group in the presence of a hydrosilylation catalyst known per se.

6. Liquid-crystalline polyorganosiloxanes obtainable by polymerization of the liquid-crystalline siloxanes according to any one of Claims 1 to 4.

7. Use of the liquid-crystalline siloxanes according to any one of Claims 1 to 4 and of liquid-crystalline polyorganosiloxanes according to Claim 6 for the production of membranes, in the optical display of electromagnetic fields, in the area of information storage, electrographic methods, light modulation, as a constituent of polarizing foils, optical filters and reflectors, in coatings, as a constituent of paint pigments and as stationary phases for gas and liquid chromatography.

## Revendications

1. Siloxanes cristallins liquides de formule générale I
Y¹-(SiR₂-O)_{π}-SiR₂-Y² (I)
dans laquelle
Y¹ désigne un résidu alkyle ou alkényle présentant un groupement mésogène,
Y² désigne un résidu organique ayant au moins un groupement capable de subir une polymérisation et au moins un groupement cyclique bivalent,
R désigne un résidu alkyle en C₁ à C₃ et
π désigne un nombre entier d'une valeur allant de 1 à 5.

2. Siloxanes cristallins liquides selon la revendication 1, dans lesquels les résidus alkényles, respectivement alkyles Y¹, présentent des groupements mésogènes, correspondant à la formule générale II
-D-(X¹ₐ-A¹_{b}-A²_{c})_{d}-Zₑ-(-X²_{f}-A³_{g}-A⁴ₕ-)ᵢ-A⁵ₖ (II)
dans laquelle
D représente un résidu d'hydrocarbure bivalent, substitué, le cas échéant, par des atomes d'halogène, de formule générale CₙHₘ, pour lequel on peut remplacer une ou plusieurs des unités de méthylène non voisines par X¹,
n désigne un nombre entier d'une valeur allant de 0 à 20,
m désigne un nombre non négatif ayant la valeur de (2n) ou de (2n-2),
X¹ et X² désignent des résidus divalents identiques ou différents du groupe -O-, -COO-, -CONH-, -CO-, -S-, -C≡C-, -CH=CH-, -CH₂-CH₂-, -CH=N-, -N=N- et -N=N(O)-,
A¹, A², A³ et A⁴ désignent des résidus divalents, identiques ou différents, à savoir des résidus 1,4-phénylène, 1,4-cyclohexylène, des arylènes substitués ayant de 1 à 10 atomes de carbone, des cycloalkylènes substitués ayant de 1 à 10 atomes de carbone et des hétéroarylènes ayant de 1 à 10 atomes de carbone,
Z désigne des résidus identiques ou différents, ayant de divalents à tetravalents, de benzène-1,4-cyclohexane ou de benzène-1,3-cyclopentane,
A⁵ désigne des résidus alkyle, alkoxy ou cycloalkyle, identiques ou différents, saturés ou oléfiniquement insaturés, ayant à chaque fois de 1 à 16 atomes de carbone, des résidus stéroïdes, des atomes d'halogène, des atomes d'hydrogène, des groupements hydroxyle, nitrile et trialkylsiloxy, dont les résidus alkyles correspondants possèdent de 1 à 8 atomes de carbone,
a, b, c, d, f, g, h, i et k désignent à chaque fois, indépendamment les uns des autres, des nombres entiers identiques ou différents d'une valeur de 0, 1, 2 ou 3, la somme a+b+c+d+e+f+g+h+i+k étant au moins de 2 et la somme de d et de i étant au maximum de 4 et
e désigne un chiffre d'une valeur de 0 ou de 1, sous réserve que dans Y¹ deux atomes d'oxygène ne sont jamais directement reliés l'un à l'autre.

3. Siloxanes cristallins liquides selon la revendication 1 ou 2, dans lesquels les résidus organiques Y² ayant au moins un groupement capable de subir une polymérisation et au moins un groupement cyclique à deux liaisons libres correspondent à la formule générale V
-D-(X¹ₐ-B¹_{b}-B²_{c})_{d}-Zₑ-(-X²_{f}-B³_{g}-B⁴ₕ-)ᵢA⁵ₖ (V)
dans laquelle
B¹, B², B³ et B⁴ présentent les significations des résidus A¹, A², A³, A⁴ et D,
D, X¹, X², Z, A⁵, a, b, c, d, f, g, h, i, k et e présentent les significations précédentes indiquées dans la formule générale II, la somme b+c+e+g+h étant au moins de 1,
sous réserve que dans Y² deux atomes d'oxygène ne soient jamais directement reliés l'un à l'autre, et qu'au moins une liaison double éthyléniquement insaturée soit présente.

4. Siloxanes cristallins liquides selon l'une quelconque des revendications 1 à 3, dans lesquels π désigne la valeur 1.

5. Procédé de fabrication des siloxanes cristallins liquides selon l'une quelconque des revendications 1 à 4, dans lequel on fait réagir un composé de formule générale X
Y¹(SiR₂-O)_{π}-SiR₂-H (X)
dans laquelle
Y¹, R et π présentent les significations précédentes, avec un alcène et/ou un alcyne présentant un groupement capable de subir une polymérisation et au moins un groupement cyclique bivalent, en présence d'un catalyseur d'hydrosilylation connu en soi.

6. Polyorganosiloxanes cristallins liquides, que l'on peut obtenir grâce à une polymérisation des siloxanes cristallins liquides selon l'une quelconque des revendications 1 à 4.

7. Utilisation des siloxanes cristallins liquides selon l'une quelconque des revendications 1 à 4 et des polyorganosiloxanes cristallins liquides selon la revendication 6 pour la fabrication de membranes, pour l'affichage optique de champs électromagnètiques, dans le secteur du stockage des informations, des procédés électrographiques, de la modulation de la lumière, en tant que constituant de feuilles de polarisation, de filtres optiques et de reflecteurs, dans des revêtements, en tant que constituants de pigments pour peintures et en taut que phases stationnaires pour la chromatographie en phase gazeuse et liquide.
